# EUROPÄISCHE PATENTSCHRIFT

(11) **EP 1 351 559 B1**
(45) Veröffentlichungstag und Bekanntmachung des Hinweises auf die Patenterteilung: **02.07.2008**
(21) Anmeldenummer: 03007625.1
(22) Anmeldetag: 02.04.2003
(51) Int. Cl.: H05B 41/02

(54) **Befestigungssystem für elektrische und/oder mechanische Bauteile einer Leuchte**
Fastening system for electronic and/or mechanical components of a lighting device
Système de fixation des composants électriques et/ou mécaniques d'un luminaire

(30) Priorität: 02.04.2002 DE 10214549
(43) Veröffentlichungstag der Anmeldung: 08.10.2003
(73) Patentinhaber: Siteco Beleuchtungstechnik GmbH, 83301 Traunreut (DE)
(72) Erfinder: Weinbrenner, Franz, 83371 Stein/Traun (DE); Oberhofer, Peter, 83352 Altenmarkt (DE)
(74) Vertreter: Schohe, Stefan

(56) Entgegenhaltungen:
- EP-A- 0 811 527
- WO-A-90/07209
- DE-A- 4 022 876
- US-A- 5 934 935
- US-B1- 6 283 618

## Beschreibung

Die Erfindung betrifft ein Befestigungssystem zum Befestigen von elektrischen und/oder mechanischen Bauteile an einem Trägerelement einer Leuchte, wie zum Beispiel einem Geräteträger oder einer Wand eines Leuchtengehäuses, sowie ein zugehöriges Befestigungselement.

Elektrische Komponenten einer Leuchte, wie Vorschaltgeräte, Kondensatoren und dergleichen, werden bei gängigen Leuchten vielfach mit der Rahmenkonstruktion der Leuchte oder einem hierfür speziell vorgesehenen Geräteträger verschraubt. Problematisch ist hierbei, daß für eine Verschraubung der elektrischen Komponenten in der Rahmenkonstruktion oder an dem Geräteträger entsprechende Befestigungspunkte vorgesehen sein müssen, da die Länge solcher elektrischer Komponenten nicht normiert oder standardisiert ist. Zur Lösung dieses Problems wird vielfach vorgesehen, eine Komponente mit dem entsprechenden Teil der Leuchte zu verschweißen oder zu vernieten. Dies setzt jedoch einen größeren apparativen Aufwand voraus und ist auch nicht bei allen für die Rahmenkonstruktion bzw. den Geräteträger in Frage kommenden Materialien möglich. Darüber hinaus wird auf diese Weise eine nicht zerstörungsfrei lösbare Verbindung geschaffen, so daß ein Auswechseln der entsprechenden elektrischen Komponente in der Regel nur unter Beschädigung der Rahmenkonstruktion bzw. des Geräteträgers möglich ist.

US-PS 6 283 618 B1 offenbart eine Leuchtenkonstruktion, bei der zur Verbindung zweier Teile, z.B. einer Anschlußbox und einer Gerätebox oder einer Gerätebox und einer optischen Anordnung, eine Verbindung vorgesehen ist, bei der eine Lasche oder ein Haken eines Teils in eine Öffnung in einem anderen Teil eingeführt wird, wobei hierbei eine Schwenk- oder Rastverbindung gebildet wird.

WO 90/07209 A1 offenbart einen Adapter zum Verwenden von Lampen mit Steckfassung bei einer Leuchte mit einer Schraubfassung, der aus zwei durch eine Schraube verbundenen Teilen besteht. Hierbei weist ein Teil des Adapters eine vorstehende geschlossene Wand auf, die zwei bogenförmige Abschnitte besitzt, welche das untere Ende des anderen Teils beim Zusammenbau führen sollen.

DE 40 22 876 A1 offenbart eine Isolierbasis, in welche über eine Rastverbindung Anschlußklemmen eingesetzt werden können, wobei die Isolierbasis über eine weitere Rastverbindung in einer Öffnung eines Anbauelements befestigt werden kann.

Es ist die Aufgabe der Erfindung, ein Befestigungssystem für elektrische und/oder mechanische Leuchtenbauteile zur Verfügung zu stellen, welches eine zerstörungsfrei lösbare Verbindung solcher Bauteile mit einem entsprechenden Trägerelement der Leuchte in einer Weise gestattet, daß auch die Montage von Leuchtenbauteilen mit unterschiedlichen Baugrößen, insbesondere mit unterschiedlich beabstandeten Befestigungspunkten, leicht möglich ist.

Erfindungsgemäß wird diese Aufgabe gelöst durch ein Befestigungssystem gemäß Anspruch 1 sowie durch ein Befestigungsteil nach Anspruch 16.

Erfindungsgemäß besitzt ein Befestigungssystem zum Befestigen von elektrischen und/oder mechanischen Leuchtenbauteilen an einem Trägerelement einer Leuchte, zum Beispiel einem Geräteträger, einer Tragplatte in einem Leuchtengehäuse, einer Wand eines Leuchtengehäuses oder dergleichen, mindesten einen erhöhten oder vertieften Aufnahmebereich des Trägerelements und mindestens ein Befestigungselement zum Verbinden mit dem Trägerelement und mit dem Leuchtenbauteil, welches einen komplementär zu der Erhöhung oder Vertiefung des Aufnahmebereichs ausgebildeten Abschnitt aufweist, derart, daß das Befestigungselement und ein Abschnitt der Erhöhung bzw. Vertiefung des Aufnahmebereichs formschlüssig ineinandergreifen können, sowie Mittel zum Fixieren des Befestigungselements in dem Aufnahmebereich. Ein erfindungsgemäßes Befestigungssystem kann mehrere derartige Aufnahmebereiche und Befestigungselemente, ggf. mit unterschiedlicher Ausgestaltung, vorsehen.

Vorzugsweise sind die Erhöhung bzw. Vertiefung eines Aufnahmebereichs und ein Befestigungselement so ausgebildet, daß das Befestigungselement in dem Aufnahmebereich des Trägerelementes ein- bzw. aufgesteckt werden kann.

In einer Ausführungsform des erfindungsgemäßen Befestigungssystems ist das Befestigungselement im montierten Zustand auf einer dem montierten Leuchtenbauteil gegenüberliegenden Seite des Trägerelements in den Aufnahmebereich eingesetzt.

Dabei können die Vertiefung bzw. Erhöhung des Aufnahmebereichs und das Befestigungselement so ausgebildet sein, daß der Formschluß zwischen Befestigungselement und Trägerelement eine Bewegung des Befestigungselementes entlang dem Trägerelement in einer ersten Richtung blockiert und in einer hierzu nicht parallelen Richtung zuläßt.

Die Erfindung kann insbesondere vorsehen, daß die Erhöhung bzw. Vertiefung des Trägerelements ein Profil aufweist, welches entlang einer Linie entlang dem Trägerelement translationsinvariant ist, wobei das Befestigungselement zumindest in einer Schnittebene einen Querschnitt besitzt, welcher dem Querschnitt der Erhöhung bzw. Vertiefung des Trägerelements in einer Ebene senkrecht zu der besagten Linie im Sinne eines Formschlusses entspricht. Beispielsweise kann der Aufnahmebereich des Trägerelements als Nut ausgebildet sein, in welche das Befestigungselement eingesteckt werden und entlang der das eingesteckte Befestigungselement verschoben werden kann. Der Querschnitt der Erhöhung bzw. Vertiefung und der Querschnitt des hierzu entsprechenden Abschnitts des Befestigungselements müssen nicht vollständig identisch sein. Beispielsweise kann vorgesehen sein, daß die Höhe des Befestigungselements in einer Einsteckrichtung geringer als die entsprechende Höhe einer Vertiefung des Trägerelements ist, so daß das Befestigungselement im montierten Zustand vollständig versenkt ist. Dies gestattet es, das Trägerelement mit oder ohne daran angebrachtem Befestigungselement in gleicher Weise, also ohne Behinderung durch ein daran befindliches Befestigungselement, an oder in einer Leuchte zu montieren. Es kann insbesondere vorgesehen sein, daß die Höhe des Befestigungselements kleiner als die Tiefe einer Nut ist, in der das Befestigungselement angebracht wird, so daß das Befestigungselement, ohne aus der Nut hervorzustehen, in der Nut verschoben und fixiert werden kann.

Zusätzlich zu Einrichtungen, die ein Verschieben des Befestigungselements entlang einer Richtung auf dem Trägerelement zulassen, oder anstelle von solchen, kann bei einem erfindungsgemäßen Befestigungssystem die Erhöhung bzw. Vertiefung eines Trägerelements und eines Befestigungselement so ausgebildet sein, daß bei einem Eingriff ineinander eine Bewegung entlang dem Trägerelement blockiert wird.

Bei dieser Ausführungsform wirkt das Befestigungselement wie ein Stecker, d.h. es kann aufgrund des formschlüssigen Eingriffs nur in der Einsteckrichtung relativ zu dem Trägerelement bewegt werden. Wenn Trägerelement und Befestigungselement ineinander eingesteckt sind, kann das Befestigungselement außer in der Einsteckrichtung nicht gegenüber dem Trägerelement bewegt werden.

Gemäß einer Ausführungsformen sieht die Erfindung vor, daß das Befestigungselement und die Erhöhung bzw. Vertiefung des Trägerelements so ausgestaltet sind, daß der Formschluß zwischen den beiden Elementen eine Bewegung mit einer Komponente senkrecht zu der Oberfläche des Trägerelementes gestattet, so daß ein Einstecken ineinander möglich ist. Die Möglichkeit, das Befestigungselement seitlich in den Aufnahmebereich des Trägerelementes einzuführen, muß dagegen nicht notwendig gegeben sein. Bei Ausführungsformen, bei denen eine Bewegung des Befestigungselements relativ zu dem Trägerelement im Eingriff mit demselben möglich ist, kann daher der Verschiebungsweg begrenzt sein, beispielsweise durch einen Anschlag bei einer erhöhten Schiene an dem Trägerelement oder durch eine an den Enden geschlossene Nut.

In einer bevorzugten Ausführungsform des erfindungsgemäßen Befestigungssystems weisen der Aufnahmebereich des Trägerelementes und das Befestigungselement jeweils zumindest eine Wand auf, die bei einem Formschluß der beiden Teile in reibschlüssigen Kontakt mit einer Wand des jeweils anderen Teils steht, wobei eine Einrichtung zum Zusammenpressen der beiden Wände vorgesehen ist, um einen Reibschluß zwischen den beiden Teilen zu erzeugen.

Eine reibschlüssige Fixierung kann erfindungsgemäß allerdings auch mit anderen Mitteln erfolgen. Beispielsweise können an dem Befestigungselement und/oder in dem Aufnahmebereich des Trägerelementes Spreizelemente vorhanden sein, welche bei einem Zusammenstekken der beiden Teile jeweils gegen eine Wand des anderen Teils aufgrund ihrer Elastizität drücken oder, nach Art eines Spreizdübels, durch ein Betätigungselement, wie eine Schraube, gegen die Wand des jeweils anderen Teils gedrückt werden können. Zum Fixieren des Befestigungselementes gegenüber dem Aufnahmebereich des Trägerelements können jedoch auch andere Mittel, insbesondere Rastverbindungen oder dergleichen, vorgesehen sein. Gemäß einer Ausführungsform der Erfindung kann auch vorgesehen sein, daß das Befestigungselement mit dem Aufnahmebereich des Trägerelementes verklebt wird.

Die erfindungsgemäße Befestigungseinrichtung kann vorsehen, daß der Abschnitt der Erhöhung bzw. Vertiefung des Aufnahmebereichs des Trägerelements Anlageflächen aufweist, die in Richtung zu dem zu montierenden Leuchtenbauteil mit einem sich verjüngenden Zwischenraum zwischen diesen Anlageflächen, gegebenenfalls zu einer Spitze oder zu einer stumpfen Spitze, aufeinander zulaufen, und das Befestigungselement dazu komplementäre Seitenflächen aufweist. Es hat sich gezeigt, daß solche, beispielsweise konische oder pyramidenförmige Anlageflächen besonders vorteilhaft sind, da sich in diesem Fall die Befestigungselemente besonders einfach in die Vertiefung einlegen lassen. Im Unterschied zu Systemen, bei denen die Befestigungselemente beispielsweise seitlich in eine Schiene eingeschoben werden müssen, ist die Montage mit einer erheblichen Zeitersparnis verbunden und es können nachträglich noch Leuchtenkomponenten an beliebigen Orten zwischen bereits eingebauten Komponenten eingesetzt werden, ohne daß die anderen Komponenten zum Einschieben zusätzlicher Befestigungselemente erst wieder demontiert werden müßten.

In einer Ausführungsform haben die Erhöhung oder Vertiefung des Trägerelementes und der hierzu komplementäre Abschnitt des Befestigungselementes einen trapezförmigen oder dreieckigen Querschnitt bezüglich mindestens einer Schnittebene, wobei insbesondere der mit der Erhöhung bzw. Vertiefung des Trägerelementes zusammenwirkende Abschnitt des Befestigungselementes die Form eines Pyramidenstumpfs, einer Pyramide, eines Kegelstumpfs oder eines Kegels aufweisen kann. Dabei sind die nicht rotationssymmetrischen Formen besonders bevorzugt, weil diese, wenn die Fixierung mittels einer Schraubverbindung entlang der Symmetrieachse des Befestigungselements erfolgt, durch den Formschluß mit dem Aufnahmebereich am Mitdrehen gehindert werden.

Der mit dem Aufnahmebereich des Trägerelements zusammenwirkende Abschnitt des Befestigungselements muß nicht notwendigerweise ein Teilbereich des Befestigungselements sein. Es kann auch vorgesehen sein, daß das ganze Befestigungselement formschlüssig mit der Vertiefung bzw. der Erhöhung des Aufnahmebereichs des Trägerelementes zusammenwirkt.

In einer bevorzugten Ausführungsform des erfindungsgemäßen Befestigungssystems kann ein Mittel zum gleichzeitigen Verbinden des Befestigungselementes mit dem Trägerelement und dem Leuchtenbauteil vorgesehen sein. Beispielsweise kann eine Schraube vorgesehen sein, welche das Befestigungselement durchsetzt und das Trägerelement und das Leuchtenbauteil verbindet. Dabei kann vorgesehen sein, daß das Mittel zum Verbinden, welches beispielsweise eine Schraubverbindung oder eine Rastverbindung bildet, von einer von dem Leuchtenbauteil abgewandten Seite betätigt werden kann. Die Erfindung kann vorsehen, daß ein Gewindestift an dem Leuchtenbauteil vorhanden oder in das Leuchtenbauteil eingesteckt ist, ein Loch des Befestigungselements zumindest teilweise durchsetzt und in diesem Loch oder auf der Seite des Befestigungselements, die von dem Leuchtenbauteil abgewandt ist, durch eine Mutter gesichert ist.

Gemäß einer alternativen Ausführungsform kann vorgesehen sein, daß das Befestigungselement ein Sackloch aufweist und das Leuchtenbauteil an dem Befestigungselement durch eine in das Sackloch eingedrehte selbstschneidende Schraube oder Furchschraube gesichert ist.

Es kann auch vorgesehen sein, daß eine Schraube durch das Trägerelement und das Befestigungselement von der von dem Leuchtenbauteil abgewandten Seite gesteckt werden und dann mit einem entsprechenden mit einem Innengewinde versehenen Abschnitt des Leuchtenbauteils verschraubt wird. Je nach Einsatzzweck und dem zu befestigenden Leuchtenbauteil kann allerdings auch vorgesehen sein, daß das Befestigungsmittel von der Seite der Leuchtenkomponente aus betätigt werden kann.

Diese und weitere Merkmale und Vorteile der vorliegenden Erfindung werden anhand der nachfolgenden Zeichnungen verdeutlicht. Es zeigen:
Figur 1 eine perspektivische Ansicht eines Geräteträgers zur Aufnahme von Leuchtenbauteilen (in Figur 1 nicht gezeigt) mit einer Ausführungsform des erfindungsgemäßen Befestigungssystems,
Figur 2 eine Aufsicht auf einen Geräteträger entsprechend dem erfindungsgemäßen Befestigungssysem von der für die Montage der Leuchtenkomponenten abgewandten Seite,
Figur 3 einen Schnitt entlang der Linie A-A der Figur 2,
Figur 4 eine perspektivische Ansicht eines Geräteträgers, ähnlich zu Figur 1, jedoch mit montierten Leuchtenkomponenten,
Figur 5 eine perspektivische Ansicht eines erfindungsgemäßen Befestigungselements,
Figur 6 eine Schnittansicht eines Geräteträgers, ähnlich zu Figur 3, jedoch mit erfindungsgemäß montiertem Leuchtenbauteil.

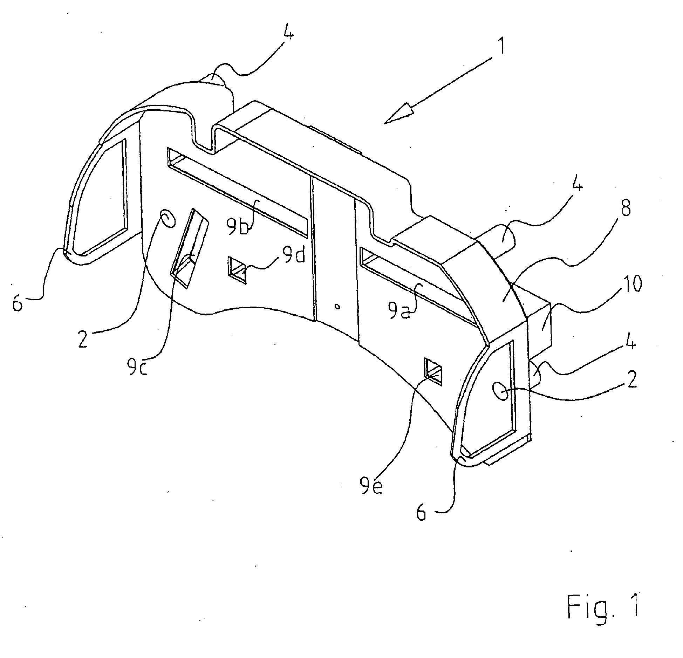

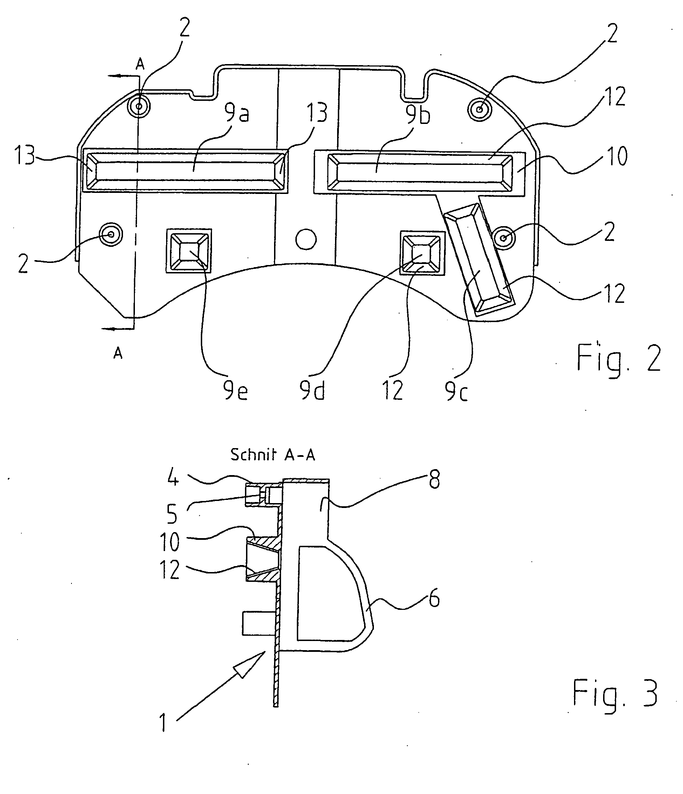

Figur 1 zeigt einen Geräteträger 1 für eine Leuchte, auf dem elektrische und mechanische Leuchtenkomponenten, wie z.B. Vorschaltgeräte, Kondensatoren, Zündgeräte etc., montiert werden können. Der Geräteträger 1 wird in ein Leuchtengehäuse (nicht dargestellt) eingesetzt. Die Montage der Leuchtenbauteile kann dabei außerhalb oder innerhalb des Leuchtengehäuses stattfinden. Die Möglichkeit der Montage innerhalb des Leuchtengehäuses ist insbesondere dann vorteilhaft, wenn Leuchtenbauteile nachgerüstet werden. Zum Befestigen des Geräteträgers mit einem Leuchtengehäuse befinden sich in dem Geräteträger vier Durchgangslöcher 2 in zylindrischen Vorsprüngen 4 auf der Unterseite des Geräteträgers, die in montiertem Zustand zu einer Wand eines Leuchtengehäuses weist, an dem der Geräteträger angebracht, z.B. eingelegt oder verrastet ist. Durch die Vorsprünge 4 ist der Geräteträger zu einer Wand des Leuchtengehäuses im montierten Zustand beabstandet. Die Durchführungslöcher 2 können mit Haltestiften an dem Leuchtengehäuse (nicht dargestellt) zusammenwirken, deren Außendurchmesser geringfügig kleiner als der Innendurchmesser der Durchgangslöcher 2 ist, so daß die Vorsprünge 4 auf die Haltestifte des Leuchtengehäuses aufgesteckt werden können und diese Haltestifte in den Durchgangslöchern 2 gehalten werden. Auf diese Weise ist es möglich, den Geräteträger durch Aufstecken auf diese Haltestifte an dem Leuchtengehäuse zu befestigen. Als Anschlag für die Haltestifte können in den Durchgangslöchern Trennwände 5 vorgesehen sein, welche, wie in Fig. 3 gezeigt, ggf. auch durchbohrt sein können, so daß durch diese Trennwand ggf. auch eine Schraube eingedreht werden kann. Um den Geräteträger leichter ein- und ausbauen zu können, befinden sich seitlich an ihm zwei Haltegriffe 6. Die Haltegriffe 6 sind in einer seitlichen Wand 8 integriert, die zur Versteifung des Geräteträgers 1 dient. Mit den Haltegriffen 6 läßt sich der Geräteträger leicht von den Haltestiften des Leuchtengehäuses abziehen. Die Haltestifte müssen nicht notwendig an dem Leuchtengehäuse vorgesehen sein, sondern können auch an einem anderen Leuchtenbauteil vorgesehen sein, welches den Geräteträger trägt. Gegebenenfalls kann, alternativ oder ergänzend zu der Befestigung mit den Haltestiften, eine Befestigung durch Verschrauben, z.B. über die Durchgangslöcher 2, oder Verrasten vorgesehen sein.

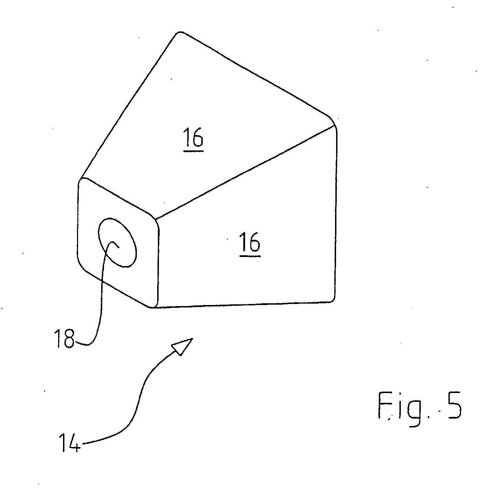

Auf der für die Montage von Leuchtenbauteilen vorgesehenen Seite des Geräteträgers (Montageseite) befinden sich mehrere Vertiefungen 9a bis 9e, die sich in Vorsprünge 10 auf der gegenüberliegenden Seite des Geräteträgers hinein erstrecken und schließlich in eine Öffnung münden. Mit diesen Vertiefungen 9a bis 9e lassen sich die Leuchtenbauteile montieren. Dazu befinden sich auf der Innenseite der Vorsprünge 10 im Bereich der Vertiefungen abgeschrägte Anlageflächen 12, in welche sich formschlüssig ein Befestigungselement 14, welches in Figur 5 gezeigt ist, von der der Montageseite gegenüberliegenden Seite des Geräteträgers einsetzen läßt. Das Befestigungselement 14 hat die Form eines Pyramidenstumpfs, wobei die Seitenflächen 16 so abgeschrägt sind, daß beim Einsetzen des Befestigungselements 14 in die Vorsprünge 10 die Seitenflächen 16 formschlüssig an den Anlageflächen 12 anliegen. Einige Vertiefungen 9a, 9b und 9c besitzen eine längliche Form, während die Vertiefungen 9d und 9e die Form eines inversen Pyramidenstumpfes mit quadratischer Grundfläche haben. Abhängig von der Form der Vertiefung und der Position, an der das Befestigungselement 14 eingesetzt wird, liegen zwei, drei oder alle vier Seitenflächen 16 des Befestigungselements 14 an den Anlageflächen 12 an. Zwei oder drei Seitenflächen 16 können bei den länglichen Vertiefungen 9a, 9b und 9c anliegen, während bei den quadratischen Vertiefungen 9d und 9e alle vier Seitenflächen 16 des Befestigungselements 14 anliegen. Durch die Abschrägung der Anlageflächen 12 wird dabei verhindert, daß das Befestigungselement 14 durch die Fläche des Geräteträgers hindurchtreten kann. Von der dem Befestigungselement abgewandten Seite des Gehäuseträgers wird das festzulegende Leuchtenbauelement angelegt.

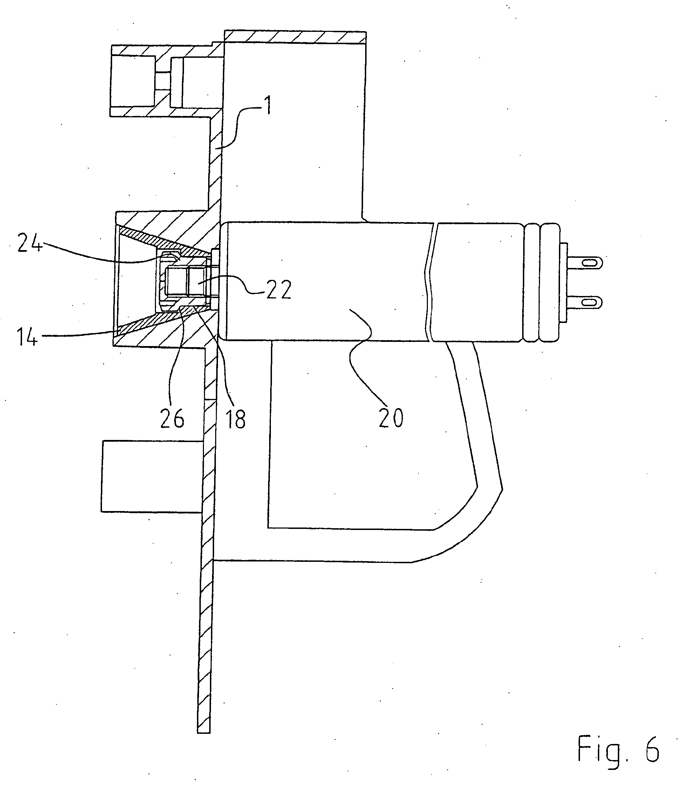

Das Befestigungselement wird mit dem Leuchtenbauteil durch eine Verschraubung durch die Vertiefung 9a, 9b, 9c bzw. 9e hindurch verbunden. Die Verschraubung erfolgt dabei entlang der Symmetrieachse des Befestigungselements. Mittig in dem Befestigungselement befindet sich ein Durchgangsloch 18, durch die eine Schraube im montierten Zustand hindurchgreift und das Leuchtenbauteil und das Befestigungselement miteinander verbindet. Ein Beispiel einer solchen Verbindung ist in dem Querschnitt gemäß Figur 6 gezeigt. Das Leuchtenbauteil, welches in diesem Fall ein Kondensator 20 ist, besitzt stirnseitig, mit dem Kondensator fest verbunden, einen Gewindestift 22. Der Gewindestift 22 wird zur Montage des Kondensators in eine Mutter mit Ansatz 24 eingedreht, welche formschlüssig in das Innere des Befestigungselements 14 eingesetzt ist. Durch eine Stufe 26 in der Bohrung 18 des Befestigungselements 16, den der Ansatz der Mutter 24 hintergreift, wird die Mutter entlang der Längsachse des Befestigungselements in der Richtung zum Leuchtenbauteil blockiert. Auf diese Weise entsteht eine feste Verbindung zwischen dem Leuchtenbauteil 20, dem Geräteträger 1, dem Befestigungselement 14 und der Mutter mit Ansatz 24.

Die Schraubverbindung zwischen dem Leuchtenbauteil und dem Befestigungselement 14 kann jedoch auch anders ausgeführt sein. Beispielsweise kann sich in dem Verbindungselment 14 selbst ein Innengewinde befinden, in welches der Gewindestift des Leuchtenbauteils direkt eingreift.

Es kann jedoch auch vorgesehen sein, daß die Verschraubung in die andere Richtung erfolgt, d.h. das Leuchtenbauteil besitzt ein Innengewinde, in welches eine Schraube eingreift, die durch die Bohrung 18 in dem Befestigungselement 14 hindurchgreift, wobei der Schraubenkopf an einer Hervorstehung 26 innerhalb der Bohrung 18 blockiert wird. Alternativ können an dieser Stelle jedoch auch andere Verbindungstypen, z.B. eine selbstschneidende Schraube, die durch eine Öffnung an der zu montierenden Leuchtenkomponente in ein einfaches, zur Leuchtenkomponente weisendes Sackloch in dem Befestigungselement eingedreht wird, oder eine Rastverbindung zwischen Leuchtenkomponente und Befestigungselement, vorgesehen sein.

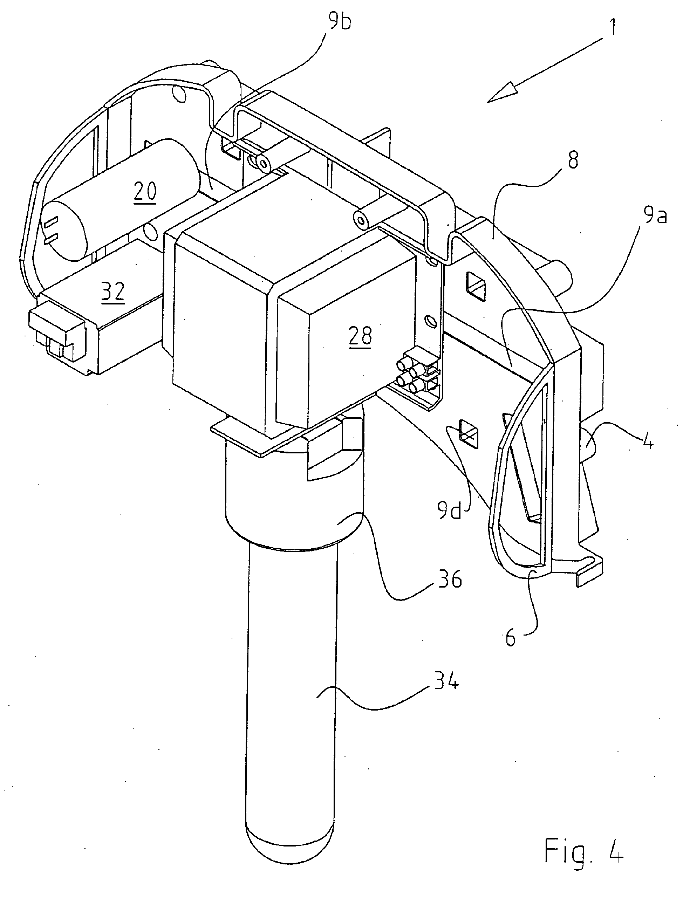

Die Vertiefungen, in welche die Befestigungselemente eingesetzt werden, können, wie bereits oben erwähnt, unterschiedliche Formen besitzen. Die Figur 2 zeigt beispielsweise drei Vertiefungen 9a, 9b und 9c in Form einer länglichen Nut und zwei Vertiefungen 9d und 9e mit einer quadratischen Grundform. Innerhalb der länglichen Vertiefungen 9a, 9b, 9c können die Befestigungselemente 14 entlang der Längsrichtung zwischen den zwei Schmalseiten 13 der länglichen Vertiefung frei positioniert werden. Die zwei Schmalseiten 13 wirken als Anschläge für die Befestigungselemente. Hierdurch wird es ermöglicht, Leuchtenelemente individuell entlang der Nutrichtung zu positionieren und zu befestigen. Insbesondere können auch Leuchtenkomponenten befestigt werden, die mehrere unterschiedlich beabstandete Befestigungspunkte entlang einer Linie besitzen. In der Figur 4 ist beispielsweise ein Vorschaltgerät 28 mit voneinander beabstandeten Befestigungspunkten gezeigt, welches entlang der Nut 9a und 9b befestigt ist. Ein Kondensator 20 ist in dieser Figur ebenfalls an der Nut 9b befestigt, allerdings, wie in Figur 6 gezeigt, an nur einem Befestigungspunkt. Diese Komponenten lassen sich, beispielsweise für unterschiedliche Leuchtentypen, entlang der Nutrichtung frei positionieren und durch eine Schraube verspannen und dadurch fixieren. Während das Leuchtenbauteil mit dem Befestigungselement 14 in einer Nut 9a, 9b oder 9c mittels der Schraubverbindung verbunden ist, ist das Befestigungselement durch Reibungsschluß in Längsrichtung der Nut fest fixiert.

Eine andere Art der erfindungsgemäßen Vertiefungen zur Befestigung besitzt die Form eines umgekehrten Pyramidenstumpfs mit quadratischem Grundriß, welche in den Figuren mit 9d und 9e gekennzeichnet sind. Diese erlauben die Befestigung einer Leuchtenkomponente an einem festgelegten Ort auf dem Geräteträger. Ein in Figur 4 gezeigtes Zündgerät 32 ist in einer quadratischen/pyramidenstumpfförmigen Vertiefung (durch das Zündgerät 32 verdeckt) montiert. Ein Leuchtmittel 34 ist an einer Fassung 36 eingesteckt, die ebenfalls mit Hilfe der erfindungsgemäßen Befestigungsvorrichtung montiert werden kann.

Gemäß einer Ausführungsform der Erfindung kann vorgesehen sein, daß ein Leuchtenbauteil mit zwei Befestigungselementen an dem Geräteträger befestigt ist, wobei das eine Befestigungselement bezüglich des Geräteträgers formschlüssig lokalisiert ist, beispielsweise indem es in eine quadratische oder pyramidenstumpfförmige Vertiefung eingesetzt ist, während das andere Befestigungselement in eine Vertiefung eingesetzt ist, die eine Bewegung des Befestigungselements entlang der Vertiefung gestattet. Dies ermöglicht es, den Abstand zwischen den beiden Befestigungselementen auf die Lage von Befestigungspunkten an dem Leuchtenbauteil abzustimmen, die von Leuchtenbauteil zu Leuchtenbauteil verschieden sein kann.

Das Befestigungselement sowie der Geräteträger bestehen vorzugsweise aus Kunststoff. Auf diese Weise läßt sich die erforderliche Isolation elektrischer Leuchtenbauteile von dem Leuchtengehäuse erreichen. Es kann dabei auch vorgesehen sein, daß auch Befestigungselemente, z.B. Muttern, mit denen Schrauben gesichert werden, aus Kunststoff bestehen. Als Kunststoff sind beispielsweise PBT (Polybutylenterephthalath) oder Polyamide (PA) geeignet.

Die vorangehend beschriebenen Ausführungsformen sind lediglich beispielhaft zu sehen. Insbesondere sind Abweichungen von der konkreten Ausgestaltung der in den Figuren gezeigten Befestigungselemente und der komplementären Anlageflächen möglich, ohne den Bereich der Erfindung zu verlassen. Beispielsweise kann das Leuchtenbauteil auch ein Fassungswinkel sein, an dem eine Lampenfassung angebracht wird. Dies gestattet eine variable Lichttechnik bei im wesentlichen unverändertem Leuchtengehäuse.

Die in der vorstehenden Beschreibung, den Ansprüchen und den Zeichnungen offenbarten Merkmale können sowohl einzeln als auch in beliebiger Kombination für die Realisierung der Erfindung in ihren verschiedenen Ausgestaltungen von Bedeutung sein.

### Bezugszeichenliste

- 1: Geräteträger
- 2: Durchgangslöcher
- 4: zylindrischer Vorsprung
- 5: Trennwand
- 6: Haltegriff
- 8: Seitenwand
- 9: Vertiefung
- 9a, 9b, 9c: Vertiefung in Form einer Nut
- 9d, 9e: Vertiefung mit quadratischer Grundform
- 10: Vorsprung
- 12: Anlagefläche
- 13: Schmalseite einer länglichen Anlagefläche
- 14: Befestigungselement
- 16: Seitenfläche
- 18: Durchgangsloch
- 20: Kondensator
- 22: Gewindestift
- 24: Mutter mit Ansatz
- 26: Stufe
- 28: Vorschaltgerät
- 32: Zündgerät
- 34: Leuchtmittel
- 36: Fassung

## Patentansprüche

1. Befestigungssystem zum Befestigen von elektrischen und/oder mechanischen Leuchtenbauteilen an einem Trägerelement (1) einer Leuchte,
mit mindestens einem erhöhten oder vertieften Aufnahmebereich (9a, 9b, 9c, 9d, 9e) des Trägerelements (1) und mindestens einem Befestigungselement (14) zum Verbinden mit dem Trägerelement (1) und mit dem Leuchtenbauteil, welches einen komplementär zu der Erhöhung oder Vertiefung des Aufnahmebereichs ausgebildeten Abschnitt (16) aufweist, derart, daß das Befestigungselement (14) und ein Abschnitt (12) der Erhöhung bzw. Vertiefung des Aufnahmebereichs (9a, 9b, 9c, 9d, 9e) formschlüssig ineinandergreifen können,
sowie mit Mitteln zum Fixieren des Befestigungselements (14) in dem Aufnahmebereich (9a, 9b, 9c, 9d, 9e),
wobei der erhöhte oder vertiefte Aufnahmebereich (9a, 9b, 9c, 9d, 9e) in einem Querschnitt eine Breite aufweist, die sich in einer Richtung verringert, die von einer Seite des Trägerelements (1) zu dessen gegenüberliegender Seite weist, und das Befestigungselement (14) dazu komplementär ausgebildet ist, so daß im montierten Zustand Wände (16) des Befestigungselements zur Anlage mit den entsprechenden Seitenwänden der Vertiefung oder Erhöhung des Aufnahmebereichs kommen.

2. Befestigungssystem nach Anspruch 1, **dadurch gekennzeichnet, daß** die Erhöhung bzw. Vertiefung des Aufnahmebereichs (9a, 9b, 9c, 9d, 9e) und das Befestigungselement (14) so ausgebildet sind, daß das Befestigungselement (14) in dem Aufnahmebereich (9a, 9b, 9c, 9d, 9e) des Trägerelementes ein- bzw. aufgesteckt werden kann.

3. Befestigungssystem nach Anspruch 1 oder 2, **dadurch gekennzeichnet, daß** das Befestigungselement (14) im montierten Zustand auf einer dem montierten Leuchtenbauteil gegenüberliegenden Seite des Tragelements (1) angebracht ist.

4. Befestigungssystem nach einem der Ansprüche 1 bis 3, **dadurch gekennzeichnet, daß** die Vertiefung bzw. Erhöhung des Aufnahmebereichs (9a, 9b, 9c) und das Befestigungselement (14) so ausgebildet sind, daß der Formschluß zwischen Befestigungselement (14) und dem Abschnitt (12) des Aufnahmebereichs (9a, 9b, 9c) eine Bewegung des Befestigungselementes (14) entlang dem Trägerelement (1) in einer ersten Richtung blockiert und in einer hierzu nicht parallelen Richtung zuläßt.

5. Befestigungssystem nach einem der Ansprüche 1 bis 3, **dadurch gekennzeichnet, daß** die Erhöhung bzw. Vertiefung des Aufnahmebereichs (9d, 9e) und das Befestigungselement (14) so ausgebildet sind, daß der Formschluß zwischen Befestigungselement (14) und dem Abschnitt (12) des Aufnahmebereichs (9d, 9e) eine Bewegung entlang dem Trägerelement (1) blockiert.

6. Befestigungssystem nach einem der Ansprüche 1 bis 5, **dadurch gekennzeichnet, daß** der Aufnahmebereich (9a, 9b, 9c, 9d, 9e) des Trägerelementes (1) und das Befestigungselement (14) jeweils zumindest eine Wand (12, 16) aufweisen, die bei einem Formschluß der beiden Teile in reibschlüssigen Kontakt mit einer Wand des jeweils anderen Teils steht und daß eine Einrichtung zum Zusammenpressen der beiden Wände vorgesehen ist, um einen Reibschluß zwischen den beiden Teilen zu erzeugen.

7. Befestigungssystem nach einem der vorhergehenden Ansprüche, **dadurch gekennzeichnet, daß** die Erhöhung oder Vertiefung (9a, 9b, 9c, 9d, 9e) des Trägerelements (1) und der hierzu komplementäre Abschnitt (16) des Befestigungselementes (14) einen trapezförmigen oder dreieckigen Querschnitt bezüglich mindestens einer Schnittebene haben.

8. Befestigungssystem nach Anspruch 7, **dadurch gekennzeichnet, daß** der mit der Erhöhung bzw. Vertiefung (9a, 9b, 9c, 9d, 9e) des Trägerelementes (1) zusammenwirkende Abschnitt (16) des Befestigungselementes (14) die Form eines Pyramidenstumpfs, einer Pyramide, eines Kegelstumpfs oder eines Kegels aufweist.

9. Befestigungssystem nach einem der vorhergehenden Ansprüche, **gekennzeichnet durch** ein Befestigungsmittel zum gemeinsamen Verbinden des Befestigungselementes (14) mit dem Trägerelement und dem Leuchtenbauteil.

10. Befestigungssystem nach Anspruch 9, **dadurch gekennzeichnet, daß** das Befestigungsmittel eine Schraubverbindung umfaßt.

11. Befestigungssystem nach Anspruch 10, **dadurch gekennzeichnet, daß** das Befestigungsmittel eine Befestigungsmittel mit einem Außengewinde sowie eine Mutter zur Sicherung an dem Befestigungselement (14) auf der von dem Leuchtenbauteil abgewandten Seite umfaßt.

12. Befestigungssystem nach Anspruch 10, **dadurch gekennzeichnet, daß** das Befestigungsmittel eine selbstschneidende Schraube zum Zusammenwirken mit einem Sackloch des Befestigungselements, in welche die selbstschneidende Schraube eingedreht werden kann, umfaßt.

13. Befestigungssystem nach Anspruch 9, **dadurch gekennzeichnet, daß** das Befestigungsmittel zum gemeinsamen Verbinden eine Rastverbindung umfaßt.

14. Befestigungssystem nach einem der Ansprüche 9 bis 13, **dadurch gekennzeichnet, daß** das Befestigungsmittel von einer von dem Leuchtenbauteil abgewandten Seite des Trägerelements (1) aus betätigt werden kann.

15. Befestigungssystem nach einem der Ansprüche 9 bis 13, **dadurch gekennzeichnet, daß** das Befestigungsmittel von einer dem Leuchtenbauteil zugewandten Seite des Trägerelements (1) aus betätigt werden kann.

16. Befestigungsteil zum Befestigen eines elektrischen oder mechanischen Leuchtenbauteils an einem Trägerelement (1) einer Leuchte mit einem Formschlußabschnitt (16) zum formschlüssigen Ineinandergreifen mit einem komplementären Abschnitt (12) eines Trägerelementes (1), der in einem Querschnitt eine Breite aufweist, die sich in einer Richtung verringert, die von einer Seite des Trägerelements zu dessen gegenüberliegender Seite weist, wobei das Befestigungsteil hierzu komplementär ausgebildet ist, derart, daß Wände des Befestigungsteils mit den entsprechenden Seitenwänden des komplementären Abschnitts (12) des Trägerelements (1) in einem montierten Zustand zur Anlage kommen können, und mit einer Einrichtung (18) zum Verbinden mit dem Trägerelement und dem Leuchtenbauteil und zum Fixieren des Befestigungsteils hinsichtlich einer Bewegung gegenüber dem Trägerelement.

17. Befestigungsteil nach Anspruch 16, **dadurch gekennzeichnet, daß** das Befestigungsteil die Form eines Pyramidenstumpfes, einer Pyramide, eines Kegelstumpfes oder eines Kegels aufweist.

18. Leuchte mit einem elektrischen und/oder mechanischen Leuchtenbauteil, das an einem Trägerelement (1) der Leuchte befestigt ist, **dadurch gekennzeichnet, daß** das Leuchtenbauteil durch ein Befestigungssystem nach einem der Ansprüche 1 bis 15 an dem Trägerelement befestigt ist.

## Claims

1. Fastening system for fastening electrical and/or mechanical luminaire components on a support element (1) of a luminaire, having at least one elevated or depressed holding region (9a, 9b, 9c, 9d, 9e) of the support element (1) and at least one fastening element (14) for connecting to the support element (1) and to the luminaire component, which has a section (16) designed to be complementary to the elevation or depression of the holding region in such a way that the fastening element (14) and a section (12) of the elevation or depression of the holding region (9a, 9b, 9c, 9d, 9e) can engage with one another in a form-fitting fashion, and having means for fixing the fastening element (14) in the holding region (9a, 9b, 9c, 9d, 9e), the elevated or depressed holding region (9a, 9b, 9c, 9d, 9e) having in a cross section a width which reduces in a direction which points from one side of the support element (1) to the opposite side thereof, and the fastening element (14) is designed to be complementary thereto such that in the mounted state walls (16) of the fastening element come to bear against the corresponding side walls of the depression or elevation of the holding region.

2. Fastening system according to Claim 1, **characterized in that** the elevation or depression of the holding region (9a, 9b, 9c, 9d, 9e) and the fastening element (14) are designed such that the fastening element (14) can be plugged in or on the holding region (9a, 9b, 9c, 9d, 9e) of the support element.

3. Fastening system according to Claim 1 or 2, **characterized in that** in the mounted state the fastening element (14) is fitted on a side of the support element (1) opposite the mounted luminaire component.

4. Fastening system according to one of Claims 1 to 3, **characterized in that** the depression or elevation of the holding region (9a, 9b, 9c) and the fastening element (14) are designed such that the form fit between the fastening element (14) and the section (12) of the holding region (9a, 9b, 9c) blocks a movement of the fastening element (14) along the support element (1) in a first direction, and permits it in a direction not parallel thereto.

5. Fastening system according to one of Claims 1 to 3, **characterized in that** the elevation or depression of the holding region (9d, 9e) and the fastening element (14) are designed such that the form fit between the fastening element (14) and the section (12) of the holding region (9d, 9e) blocks a movement along the support element (1).

6. Fastening system according to one of Claims 1 to 5, **characterized in that** the holding region (9a, 9b, 9c, 9d, 9e) of the support element (1) and the fastening element (14) respectively have at least one wall (12, 16) which in the case of a form fit of the two parts is in frictionally engaged contact with a wall of the respective other part, and that a device is provided for pressing the two walls together in order to produce frictional engagement between the two parts.

7. Fastening system according to one of the preceding claims, **characterized in that** the elevation or depression (9a, 9b, 9c, 9d, 9e) of the support element (1) and the section (16) of the fastening element (14) complementary thereto have a trapezoidal or triangular cross section with reference to at least one section plane.

8. Fastening system according to Claim 7, **characterized in that** the section (16) of the fastening element (14) cooperating with the elevation or depression (9a, 9b, 9c, 9d, 9e) of the support element (1) takes the form of a pyramidal frustum, a pyramid, a conical frustum or a cone.

9. Fastening system according to one of the preceding claims, **characterized by** a fastening means for jointly connecting the fastening element (14) to the support element and the luminaire component.

10. Fastening system according to Claim 9, **characterized in that** the fastening means comprises a screw connection.

11. Fastening system according to Claim 10, **characterized in that** the fastening means comprises a fastening means with an external thread, and a nut for securing to the fastening element (14) on the side averted from the luminaire component.

12. Fastening system according to Claim 10, **characterized in that** the fastening means comprises a self-tapping screw for cooperating with a blind hole of the fastening element into which the self-tapping screw can be turned.

13. Fastening system according to Claim 9, **characterized in that** the fastening means for jointly connecting comprise a latching connection.

14. Fastening system according to one of Claims 9 to 13, **characterized in that** the fastening means can be actuated from a side of the support element (1) averted from the luminaire component.

15. Fastening system according to one of Claims 9 to 13, **characterized in that** the fastening means can be actuated from a side of the support element (1) facing the luminaire component.

16. Fastening part for fastening an electrical or mechanical luminaire component on a support element (1) of a luminaire, having a form-fitting section (16) for engaging in a form-fitting fashion with a complementary section (12) of a support element (1) which has in a cross section a width which reduces in a direction which points from one side of the support element to the opposite side thereof, the fastening part being designed to be complementary thereto in such a way that in a mounted state walls of the fastening part can come to bear against the corresponding side walls of the complementary section (12) of the support element (1), and having a device (18) for connecting to the support element and the luminaire component, and for fixing the fastening part with regard to a movement relative to the support element.

17. Fastening part according to Claim 16, **characterized in that** the fastening part takes the form of a pyramidal frustum, a pyramid, a conical frustum or a cone.

18. Luminaire having an electrical and/or mechanical luminaire component which is fastened on a support element (1) of the luminaire, **characterized in that** the luminaire component is fastened on the support element by a fastening system according to one of Claims 1 to 15.

## Revendications

1. Système de fixation pour fixer des composants d'appareil d'éclairage électriques et/ou mécaniques à un élément de support (1) d'un appareil d'éclairage,
comprenant au moins une zone réceptrice surélevée ou renfoncée (9a, 9b, 9c, 9d, 9e) de l'élément de support (1) et au moins un élément de fixation (14) pour le raccordement à l'élément de support (1) et au composant d'appareil d'éclairage, qui présente une section (16) de forme complémentaire à la surélévation ou au renfoncement de la zone réceptrice de sorte que l'élément de fixation (14) et une section (12) de la surélévation ou du renfoncement de la zone réceptrice (9a, 9b, 9c, 9d, 9e) puissent s'engager l'un dans l'autre mécaniquement,
ainsi que des moyens pour fixer l'élément de fixation (14) dans la zone réceptrice (9a, 9b, 9c, 9d, 9e),
dans lequel la zone réceptrice surélevée ou renfoncée (9a, 9b, 9c, 9d, 9e) présente en coupe transversale une largeur qui se réduit dans une direction orientée d'un côté de l'élément de support (1) vers son côté opposé, et l'élément de fixation (14) présente une forme complémentaire à celle-ci de sorte qu'à l'état monté, les parois (16) de l'élément de fixation viennent s'appuyer sur les parois latérales correspondantes du renfoncement ou de la surélévation de la zone réceptrice.

2. Système de fixation selon la revendication 1, **caractérisé en ce que** la surélévation ou le renfoncement de la zone réceptrice (9a, 9b, 9c, 9d, 9e) et l'élément de fixation sont conformés de sorte que l'élément de fixation (14) puisse être enfiché ou emboîté dans la zone réceptrice (9a, 9b, 9c, 9d, 9e) de l'élément de support.

3. Système de fixation selon la revendication 1 ou 2, **caractérisé en ce que** l'élément de fixation (14) est agencé, à l'état monté, sur un côté de l'élément de support (1) opposé au composant d'appareil d'éclairage monté.

4. Système de fixation selon l'une quelconque des revendications 1 à 3, **caractérisé en ce que** le renfoncement ou la surélévation de la zone réceptrice (9a, 9b, 9c) et l'élément de fixation (14) sont conformés de sorte que la complémentarité de forme entre l'élément de fixation (14) et la section (12) de la zone réceptrice (9a, 9b, 9c) bloque dans une première direction un déplacement de l'élément de fixation (14) le long de l'élément de support (1) et l'autorise dans une direction non parallèle à celle-ci.

5. Système de fixation selon l'une quelconque des revendications 1 à 3, **caractérisé en ce que** la surélévation ou le renfoncement de la zone réceptrice (9d, 9e) et l'élément de fixation (14) sont conformés de sorte que la omplémentarité de forme entre l'élément de fixation (14) et la section (12) de la zone réceptrice (9d, 9e) bloque un déplacement le long de l'élément de support (1).

6. Système de fixation selon l'une quelconque des revendications 1 à 5, **caractérisé en ce que** la zone réceptrice (9a, 9b, 9c, 9d, 9e) de l'élément de support (1) et l'élément de fixation (14) présentent respectivement au moins une paroi (12, 16) qui, par complémentarité de forme des deux pièces, se trouve en contact d'entraînement par friction avec une paroi de l'autre pièce respective et **en ce qu'**il est prévu un dispositif de compression des deux parois pour produire un entraînement par friction entre les deux pièces.

7. Système de fixation selon l'une quelconque des revendications précédentes, **caractérisé en ce que** la surélévation ou le renfoncement (9a, 9b, 9c, 9d, 9e) de l'élément de support (1) et la section (16) de l'élément de fixation (14) qui lui est complémentaire ont une section transversale trapézoïdale ou triangulaire par rapport à au moins un plan de coupe.

8. Système de fixation selon la revendication 7, **caractérisé en ce que** la section (16) de l'élément de fixation (14) coopérant avec la surélévation ou le renfoncement (9a, 9b, 9c, 9d, 9e) de l'élément de support (1) présente la forme d'un tronc de pyramide, d'une pyramide, d'un tronc de cône ou d'un cône.

9. Système de fixation selon l'une quelconque des revendications précédentes, **caractérisé par** un moyen de fixation pour le raccordement conjoint de l'élément de fixation (14) à l'élément de support et au composant d'appareil d'éclairage.

10. Système de fixation selon la revendication 9, **caractérisé en ce que** le moyen de fixation comprend un raccordement à vis.

11. Système de fixation selon la revendication 10, **caractérisé en ce que** le moyen de fixation comprend un moyen de fixation avec un filet externe ainsi qu'un écrou pour la fixation à l'élément de fixation (14) sur le côté opposé au composant d'appareil d'éclairage.

12. Système de fixation selon la revendication 10, **caractérisé en ce que** le moyen de fixation comprend une vis autotaraudeuse pour coopérer avec un trou borgne de l'élément de fixation, dans lequel la vis autotaraudeuse peut être vissée.

13. Système de fixation selon la revendication 9, **caractérisé en ce que** le moyen de fixation comprend un raccord à crans pour le raccordement conjoint.

14. Système de fixation selon l'une quelconque des revendications 9 à 13, **caractérisé en ce que** le moyen de fixation peut être actionné à partir d'un côté de l'élément de support (1) opposé au composant d'appareil d'éclairage.

15. Système de fixation selon l'une quelconque des revendications 9 à 13, **caractérisé en ce que** le moyen de fixation peut être actionné à partir d'un côté de l'élément de support (1) orienté vers le composant d'appareil d'éclairage.

16. Pièce de fixation pour fixer un composant d'appareil d'éclairage électrique ou mécanique à un élément de support (1) d'un appareil d'éclairage comprenant une section à complémentarité de forme (16) destinée à s'engager mutuellement par complémentarité de forme avec une section complémentaire (12) d'un élément de support (1), qui présente une section transversale d'une largeur qui diminue dans une direction orientée d'un côté de l'élément de support vers son côté opposé, la pièce de fixation se présentant sous une forme complémentaire à celui-ci de manière que des parois de la pièce de fixation puissent venir s'appuyer contre les parois latérales correspondantes de la section complémentaire (12) de l'élément de support (1) à l'état monté, ainsi qu'un dispositif (18) pour le raccordement à l'élément de support et au composant d'appareil d'éclairage et pour la fixation de la pièce de fixation par rapport à un déplacement par rapport à l'élément de support.

17. Pièce de fixation selon la revendication 16, **caractérisée en ce que** la pièce de fixation présente la forme d'un tronc de pyramide, d'une pyramide, d'un tronc de cône ou d'un cône.

18. Appareil d'éclairage comprenant un composant d'appareil d'éclairage électrique et/ou mécanique qui est fixé à un élément de support (1) de l'appareil d'éclairage, **caractérisé en ce que** le composant d'appareil d'éclairage est fixé à l'élément de support par un système de fixation selon l'une quelconque des revendications 1 à 15.
